# EUROPEAN PATENT SPECIFICATION

(11) **EP 2 929 736 B1**
(45) Date of publication and mention of the grant of the patent: **29.06.2016**
(21) Application number: 13817778.7
(22) Date of filing: 09.12.2013
(51) Int. Cl.: H04W 52/02

(54) **DEVICES AND METHODS FOR FACILITATING DYNAMIC POWER REDUCTION DURING DISCONTINUOUS RECEPTION**
VORRICHTUNGEN UND VERFAHREN ZUR DYNAMISCHEN LEISTUNGSREDUZIERUNG WÄHREND EINES DISKONTINUIERLICHEN EMPFANGS
DISPOSITIFS ET PROCÉDÉS CONÇUS POUR FACILITER LA RÉDUCTION DYNAMIQUE DE LA PUISSANCE AU COURS D'UNE RÉCEPTION DISCONTINUE

(30) Priority: 17.12.2012 US 201261738379 P; 04.10.2013 US 201314046860
(43) Date of publication of application: 14.10.2015
(73) Proprietor: Qualcomm Incorporated, San Diego, CA 92121-1714 (US)
(72) Inventor: CHUI, Jimmy Chi-Wai, San Diego, California 92121-1714 (US); CHANDRA, Madhup, San Diego, California 92121-1714 (US); CHIRALA, Ramesh Chandra, San Diego, California 92121-1714 (US); GURRAM, Sunil Kumar, San Diego, California 92121-1714 (US); RAMANNAVAR, Sandeep C., San Diego, California 92121-1714 (US); RAYAPATI, Hemanth Kumar, San Diego, California 92121-1714 (US)
(74) Representative: Dunlop, Hugh Christopher
(86) International application number: PCT/US2013/073866
(87) International publication number: WO 2014/099446

(56) References cited:
- EP-A1- 2 479 924
- WO-A1-2008/086532

## Description

### TECHNICAL FIELD

The technology discussed below relates generally to wireless communications, and more specifically to methods and devices for facilitating dynamic power reduction during discontinuous reception (DRX) in user equipment operating in a wireless communications system.

### BACKGROUND

Wireless communications systems are widely deployed to provide various types of communication content such as telephony, video, data, messaging, broadcast, and so on. These systems may be accessed by various types of devices adapted to facilitate wireless communications, where multiple devices share the available system resources (e.g., time, frequency, and power). One example of such a Wireless communications system is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). UMTS, which is the successor to Global System for Mobile Communications (GSM) technologies, currently supports various air interface standards, such as Wideband-Code Division Multiple Access (W-CDMA), Time Division-Code Division Multiple Access (JO-CDMA), and Time Division-Synchronous Code Division Multiple Access (TD-SCDMA). UMTS also supports enhanced 3G data communications protocols, such as High Speed Packet Access (HSPA), which provides higher data transfer speeds and capacity to associated UMTS networks.

Multiple types of devices are adapted to utilize such wireless communications systems. Such a device may be generally referred to as a user equipment or UE. UEs are becoming increasingly popular, with consumers often using power-hungry applications that run on such UEs. UEs are typically battery-powered and the amount of power a battery can provide between charges is generally limited. Accordingly, features may be desirable to improve the battery life between charges in UEs. For example, WO 2008/086532 A1 describes systems, methodologies, and devices that can facilitate reducing power consumption associated with mobile devices. EP 2479924 A1 describes a method and system for a self-adapting dynamic power reduction mechanism for physical layer devices in packet data networks.

### BRIEF SUMMARY OF SOME EXAMPLES

The following summarizes some aspects of the present disclosure to provide a basic understanding of the discussed technology. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

In accordance with the invention, there are provided a user equipment, as recited in claim 1; a method operational on a user equipment, as recited in claim 9; and a processor-readable storage medium, as recited in claim 15.

Various examples and implementations of the present disclosure facilitate power conservation by dynamic selection of power reduction techniques during discontinuous reception (DRX) according to a DRX gap length.

According to at least on aspect of the disclosure, UEs may include a communications interface including a receiver circuit and a storage medium comprising a plurality of power reduction techniques. The communications interface and the storage medium may each be coupled with a processing circuit. The processing circuit may be adapted to calculate a discontinuous reception (DRX) gap length and identify a power reduction technique associated with the calculated DRX gap length from among the plurality of power reduction techniques. The processing circuit may further be adapted to apply the identified power reduction technique to the receiver circuit during the DRX gap.

Further aspects provide methods operational on UEs and/or UEs including means to perform such methods. One or more examples of such methods may include determining a DRX gap length. A power reduction technique associated with the determined DRX gap length may be selected from a plurality of power reduction techniques. Further, one or more components of a receiver circuit may be powered down during the DRX gap according to the selected power reduction technique.

Still further aspects include processor-readable storage mediums comprising programming executable by a processing circuit. According to one or more examples, such programming may be adapted for causing the processing circuit to determine a DRX gap length. The programming may further be adapted for causing the processing circuit to identify a power reduction technique associated with the determined DRX gap length from among a plurality of power reduction techniques. Additionally, the programming may be adapted for causing the processing circuit to apply the identified power reduction technique to the receiver circuit during the DRX gap.

Other aspects, features, and embodiments associated with the present disclosure will become apparent to those of ordinary skill in the art upon reviewing the following description in conjunction with the accompanying figures.

### DRAWINGS

FIG. 1 is a block diagram of a network environment in which one or more aspects of the present disclosure may find application.
FIG. 2 is a block diagram illustrating select components of the wireless communication system of FIG. 1 according to at least one example.
FIG. 3 is a block diagram illustrating relative power levels for circuits/components of a receiver (RX) operating in a discontinuous reception (DRX) mode.
FIG. 4 is a block diagram illustrating select components of a user equipment (UE) according to at least one example.
FIG. 5 is a flow diagram illustrating at least one example of a method operational on a user equipment (UE).
FIG. 6 is a flow diagram illustrating at least one example of an algorithm for determining the DRX gap length.
FIG. 7 is a flow diagram depicting at least one example of an algorithm for selecting a power reduction technique based on the DRX gap length.

### DETAILED DESCRIPTION

The description set forth below in connection with the appended drawings is intended as a description of various configurations and is not intended to represent the only configurations in which the concepts and features described herein may be practiced: The following description includes specific details for the purpose of providing a thorough understanding of various concepts. However, it will be apparent to those skilled in the art that these concepts may be practiced without these specific details. In some instances, well known circuits, structures, techniques and components are shown in block diagram form to avoid obscuring the described concepts and features.

The various concepts presented throughout this disclosure may be implemented across a broad variety of telecommunication systems, network architectures, and communication standards. Certain aspects of the disclosure are described below for UMTS protocols and systems, and related terminology may be found in much of the following description. However, those of ordinary skill in the art will recognize that one or more aspects of the present disclosure may be employed and included in one or more other wireless communication protocols and systems.

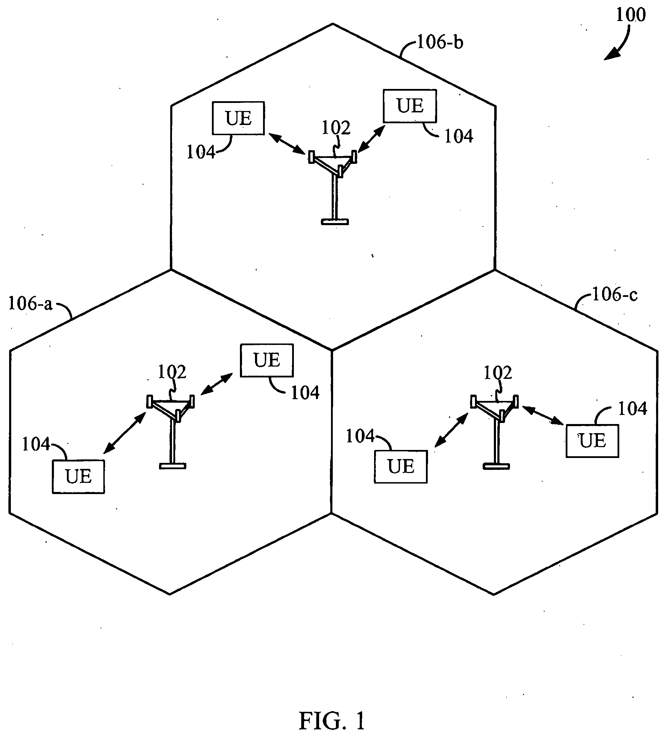

Referring now to FIG. 1, a block diagram of a network environment in which one or more aspects of the present disclosure may find application is illustrated. The wireless communications system 100 is adapted to facilitate wireless communication between one or more node Bs 102 and user equipments (UEs) 104. The node Bs 102 and UEs 104 may be adapted to interact with one another through wireless signals. In some instances, such wireless interaction may occur on multiple carriers (waveform signals of different frequencies). Each modulated signal may carry control information (e.g., pilot signals), overhead information, data, etc.

The node Bs 102 can wirelessly communicate with the UEs 104 via a node B antenna. The node Bs 102 may each be implemented generally as a device adapted to facilitate wireless connectivity (for one or more UEs 104) to the wireless communications system 100. Such a node B 102 may also be referred to by those skilled in the art as a base station, a base transceiver station (BTS), a radio base station, a radio transceiver, a transceiver function, a basic service set (BSS), and extended service set (ESS), a femto cell, a pico cell, or some other suitable terminology.

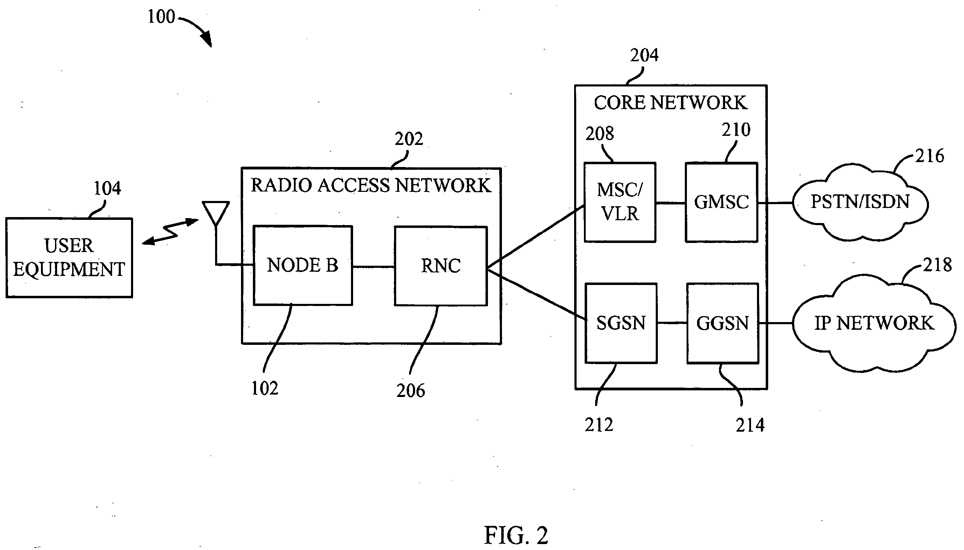

The node Bs 102 are configured to communicate with the UEs 104 under the control of a radio network controller (see FIG. 2). Each of the node B 102 sites can provide communication coverage for a respective geographic area. The coverage area 106 for each node B 102 here is identified as cells 106-a, 106-b, or 106-c. The coverage area 106 for a node B 102 may be divided into sectors (not shown, but making up only a portion of the coverage area). In various examples, the system 100 may include node Bs 102 of different types.

One or more UEs 104 may be dispersed throughout the coverage areas 106. Each UE 104 may communicate with one or more node Bs 102. A UE 104 may generally include one or more devices that communicate with one or more other devices through wireless signals. Such a UE 104 may also be referred to by those skilled in the art as an access terminal, a mobile station (MS), a subscriber station, a mobile unit, a subscriber unit, a wireless unit, a remote unit, a mobile device, a wireless device, a wireless communications device, a remote device, a mobile subscriber station, a mobile terminal, a wireless terminal, a remote terminal, a handset, a terminal, a user agent, a mobile client, a client, or some other suitable terminology. A UE 104 may include a mobile terminal and/or an at least substantially fixed terminal. Examples of a UE 104 include a mobile phone, a pager, a wireless modem, a personal digital assistant, a personal information manager (PIM), a personal media player, a palmtop computer, a laptop computer, a tablet computer, a television, an appliance, an e-reader, a digital video recorder (DVR), a machine-to-machine (M2M) device, meter, entertainment device, router, and/or other communication/computing device which communicates, at least partially, through a wireless or cellular network.

Turning to FIG. 2, a block diagram illustrating select components of the wireless communication system 100 is depicted according to at least one example. As illustrated, the node Bs 102 are included as at least a part of a radio access network (RAN) 202. The radio access network (RAN) 202 is generally adapted to manage traffic and signaling between one or more UEs 104 and one or more other network entities, such as network entities included in a core network 204. The radio access network 202 may, according to various implementations, be referred to by those skill in the art as a UMTS Terrestrial Radio Access Network (UTRAN), a base station subsystem (BSS), an access network, a GSM Edge Radio Access Network (GERAN), etc.

In addition to one or more node Bs 102, the radio access network 202 can include a radio network controller (RNC) 206, which may also be referred to by those of skill in the art as a base station controller (BSC). The radio network controller 206 is generally responsible for the establishment, release, and maintenance of wireless connections within one or more-coverage-areas associated with the one or more node Bs 102 which are connected to the radio network controller 206. The radio network controller 206 can be communicatively coupled to one or more nodes or entities of the core network 204.

The core network 204 is a portion of the wireless communications system 100 that provides various services to UEs 104 that are connected via the radio access network 202. The core network 204 may include a circuit-switched (CS) domain and a packet-switched (PS) domain. Some examples of circuit-switched entities include a mobile switching center (MSC) and visitor location register (VLR), identified as MSC/VLR 208, as well as a Gateway MSC (GMSC) 210. Some examples of packet-switched elements include a Serving GPRS Support Node (SGSN) 212 and a Gateway GPRS Support Node (GGSN) 214. Other network entities may be included, such as an EIR, a HLR, a VLR and/or a AuC, some or all of which may be shared by both the circuit-switched and packet-switched domains. A UE 104 can obtain access to a public switched telephone network (PSTN) 216 via the circuit-switched domain, and to an IP network 218 via the packet-switched domain.

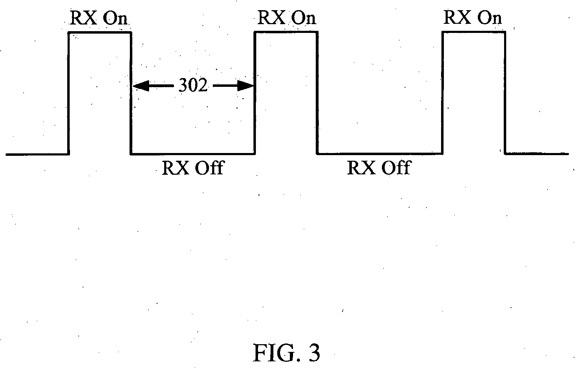

As a UE 104 operates within the wireless communication system 100, the UE may employ discontinuous reception (DRX), which may also sometimes be referred to as a slotted mode. Discontinuous reception (DRX) is a feature employed in several technologies, such as UMTS, LTE, cdma2000, etc., where the UE 104 can power down one or more circuits or components associated with its receiver to save power. For example, FIG. 3 is a block diagram illustrating relative power levels for circuits/components of a receiver (RX) operating in a discontinuous reception (DRX) mode. As shown, the UE 104 can power down or OFF the receiver for a period of time and then power back up or ON the receiver at regular intervals to monitor for transmitted messages. The period of time when the receiver is powered down or OFF is referred to herein as the "gap," such as the gap 302 in FIG. 3. Accordingly, the time interval for the gap can be referred to as the "gap length." In instances where powering up or ON is periodic, each such cycle may be referred to as a DRX cycle.

Frequently, discontinuous reception is utilized in a so-called "idle" mode, where no active call or data session is ongoing, but the UE 104 periodically or intermittently wakes up to listen for pages or other broadcast messages. However, in many modem wireless technologies, a discontinuous reception feature can be enabled during a connected mode, where the UE 104 is engaged in an ongoing voice or data call. For example, more recent examples of HSPA (the high-speed protocols for UMTS), since Release 7 standards, include a continuous packet connectivity (CPC) feature. With CPC, discontinuous reception can be enabled in some of the states within its connected mode, e.g., in a Cell_DCH state (where a dedicated channel DCH is allocated to the UE 104, e.g., for an ongoing voice call), or in a Cell_FACH state with the Enhanced FACH feature (e.g., for data services). Similarly, LTE technology (the 4G evolution of the UMTS standards) includes a connected mode discontinuous reception feature.

In these and other examples, the gap lengths can vary from a relatively short duration (e.g. less than 8ms) to a relatively long duration (e.g. hundreds or thousands of ms). For example, if a UE 104 operating according to UMTS standards is in its idle mode, then the UE 104 may be configured to monitor paging information as infrequently as once every 4.096 seconds. On the other hand, if the UE 104 is configured with CPC-DRX, the network configuration may specify for the UE 104 to monitor HS downlink channels once every 8ms to 40ms. If the UE 104 is configured with DRX in Enhanced CELL_FACH state, the UE 104 may be required to monitor the HS downlink channels periodically, with a period ranging from 40ms to 320ms. It is noted that the intervals for reception are not solely determined by the HS downlink channels. Indeed, reception of other downlink channels may also be required.

Furthermore, various activities may introduce a dynamic timing component to discontinuous reception based on network activity. For instance, if network activity is detected (e.g. paging information received, or HS-SCCH control information received) then the UE 104 may temporarily abort discontinuous reception procedures. User-initiated activity can also interrupt discontinuous reception. Thus, a UE 104 may employ different DRX cycles that vary over time, and may have essentially any value. Further, each DRX cycle includes an ON period and a gap that lasts until the next ON period. Either one or both of the ON period and/or the gap may vary over time.

As noted above, discontinuous reception enables UEs 104 to reduce power consumption during the gap periods by decreasing or turning OFF power to one or more components and/or circuits associated with the receiver. Typically, however, a UE 104 may employ only a single mode or technique of power optimization to be used during gap periods of any duration. For example, a UE 104 may be adapted to turn OFF a power amplifier during each gap period. In various instances, however, a power optimization technique that is suitable for one DRX gap length may not be suitable or ideal for another DRX gap length. For example, a longer DRX gap length may facilitate a more aggressive power reduction technique, whereas the same technique may not be suitable for a shorter DRX gap length. Thus, different methods of power reduction may be more appropriate or effective than others according to the gap length of the DRX cycle.

According to at least one aspect of the disclosure, UEs are adapted to facilitate power conservation by selecting a power reduction method, algorithm or technique from among a plurality of available power reduction methods, algorithms and/or techniques according to a duration of the gap between ON periods in a DRX cycle. That is, the power reduction method, algorithm or technique employed during a given gap may be selected in response to the gap length.

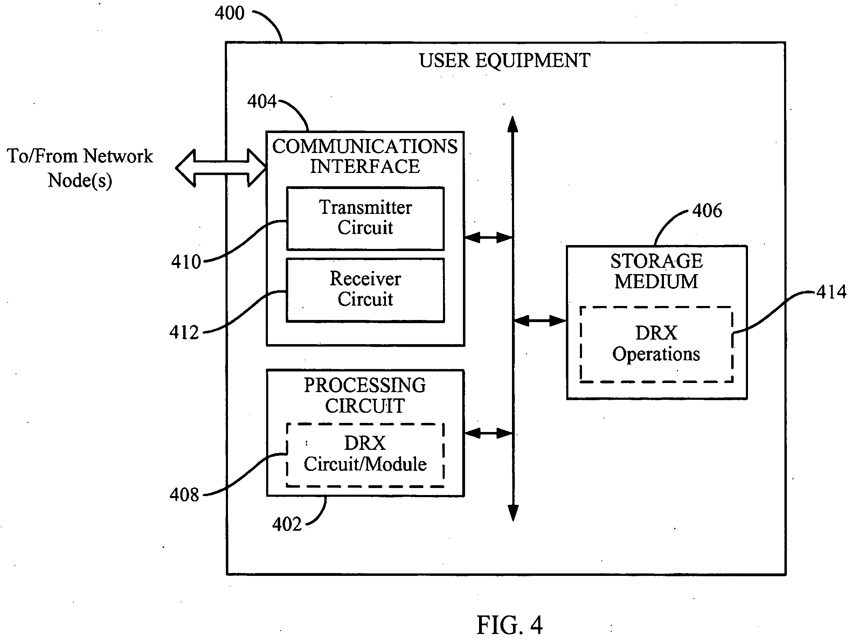

Turning to FIG. 4, a block diagram is shown illustrating select components of a user equipment (UE) 400 according to at least one example of the present disclosure. The UE 400 includes a processing circuit 402 coupled to or placed in electrical communication with a communications interface 404 and a storage medium 406.

The processing circuit 402 is arranged to obtain, process and/or send data, control data access and storage, issue commands, and control other desired operations. The processing circuit 402 may include circuitry adapted to implement desired programming provided by appropriate media in at least one example. For example, the processing circuit 402 may be implemented as one or more processors, one or more controllers, and/or other structure configured to execute executable programming. Examples of the processing circuit 402 may include a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processing circuit 402 may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processing circuit 402 are for illustration and other suitable configurations within the scope of the present disclosure are also contemplated.

The processing circuit 402 is adapted for processing, including the execution of programming, which may be stored on the storage medium 406. As used herein, the term "programming" shall be construed broadly to include without limitation instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

In some instances, the processing circuit 402 may include a discontinuous reception (DRX) circuit and/or module 408. The DRX circuit/module 408 may include circuitry and/or programming (e.g., programming stored on the storage medium 406) adapted to determine a gap length for a discontinuous reception cycle, and to select and implement power conservation techniques with the receiver circuitry according to the determined gap length.

The communications interface 404 is configured to facilitate wireless communications of the UE 400. For example, the communications interface 404 may include circuitry and/or programming adapted to facilitate the communication of information bi-directionally with respect to one or more wireless network devices (e.g., network nodes). The communications interface 404 may be coupled to one or more antennas (not shown), and includes wireless transceiver circuitry, including at least one transmitter circuit 410 (e.g., one or more transmitter chains) and at least one receiver circuit 412 (e.g., one or more receiver chains). The receiver circuit 412 may include circuitry for receiving and processing transmitted communications. For example, the receiver circuit 412 may include circuits and/or components adapted to receive downlink transmissions, process the transmission to recover information modulated onto a carrier, parse frames, descramble and despread symbols, determine constellation points, as well as additional or different functions. The receiver circuit 412 may include analog components and digital baseband components (e.g., a receiver, a receive frame processor, a receive processor, and/or a channel processor).

The storage medium 406 may represent one or more computer-readable, machine-readable, and/or processor-readable devices for storing programming, such as processor executable code or instructions (e.g., software, firmware), electronic data, databases, or other digital information. The storage medium 406 may also be used for storing data that is manipulated by the processing circuit 402 when executing programming. The storage medium 406 may be any available media that can be accessed by a general purpose or special purpose processor, including portable or fixed storage devices, optical storage devices, and various other mediums capable of storing, containing and/or carrying programming. By way of example and not limitation, the storage medium 406 may include a computer-readable, machine-readable, and/or processor-readable storage medium such as a magnetic storage device (e.g., hard disk, floppy disk, magnetic strip), an optical storage medium (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and/or other mediums for storing programming, as well as any combination thereof.

The storage medium 406 may be coupled to the processing circuit 402 such that the processing circuit 402 can read information from, and write information to, the storage medium 406. That is, the storage medium 406 can be coupled to the processing circuit 402 so that the storage medium 406 is at least accessible by the processing circuit 402, including examples where the storage medium 406 is integral to the processing circuit 402 and/or examples where the storage medium 406 is separate from the processing circuit 402 (e.g., resident in the UE 400, external to the UE 400, distributed across multiple entities).

Programming stored by the storage medium 406, when executed by the processing circuit 402, causes the processing circuit 402 to perform one or more of the various functions and/or process steps described herein. For example, the storage medium 406 may include discontinuous reception (DRX) operations 414. The DRX operations 414 may include a plurality of power reduction techniques or configurations with each technique or configuration associated with a gap length of range of gap lengths. The DRX operations 414 may further be adapted to cause the processing circuit 402 to determine a gap length in a discontinuous reception cycle, and select and implement one of the power reduction or conservation techniques based on the determined gap length, as described herein. Thus, according to one or more aspects of the present disclosure, the processing circuit 402 is adapted to perform (in conjunction with the storage medium 406) any or all of the processes, functions, steps and/or routines for any or all of the UEs (e.g., UE 104, UE 400) described herein. As used herein, the term "adapted" in relation to the processing circuit 402 may refer to the processing circuit 402 being one or more of configured, employed, implemented, and/or programmed (in conjunction with the storage medium 406) to perform a particular process, function, step and/or routine according to various features described herein.

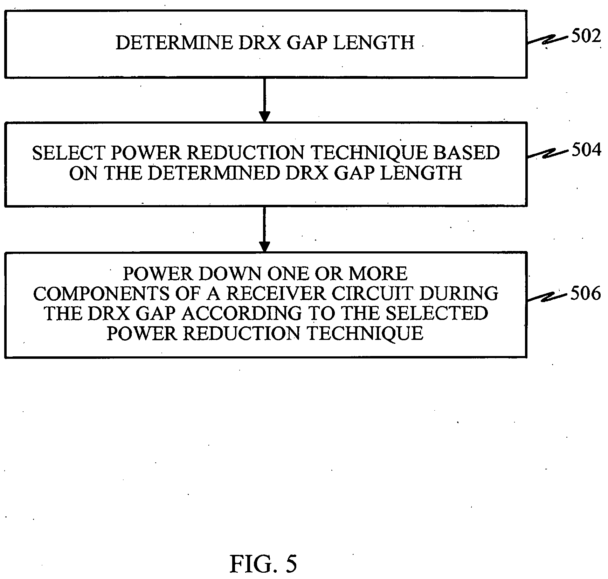

FIG. 5 is a flow diagram illustrating at least one example of a method operational on a UE, such as the UE 400. Referring to FIGS. 4 and 5, a UE 400 can determine a discontinuous reception (DRX) gap length at 502. For example, the processing circuit 402 (e.g., the DRX circuit/module 408) executing the DRX operations 414 may determine a DRX gap length for an upcoming DRX cycle.

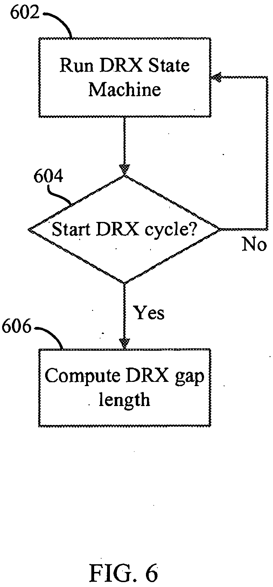

FIG. 6 is a flow diagram illustrating at least one example of an algorithm that may be implemented by the processing circuit 402 (e.g., the DRX circuit/module 408) executing the DRX operations 414 to determine the DRX gap length. As shown, a DRX state machine can be run at operation 602. The DRX state machine may be implemented in software (e.g., the DRX operations 414) executed by the processing circuit 402 in some example, and may be implemented as dedicated circuitry (e.g., a component of the processing circuit, a component of the DRX circuit/module 408) in other examples. When the DRX state machine is in operation, the DRX state machine can determine when the UE 400 can initiate the DRX gap, and when to resume reception for a given DRX cycle. This determination by the DRX state machine can be based on specification and/or implementation-specific details (e.g., how timers within the UE 400 are updated).

At decision diamond 604, the processing circuit 402 can determine whether a DRX cycle is starting or not. If not, then the DRX state machine can continue to run at operation 602. If a DRX cycle is starting, the processing circuit 402 can compute the awake time and the DRX gap length at the time the DRX cycle begins, at operation 606.

In some examples, the processing circuit 402 can compute the DRX gap length as a best-estimate based on given information for the next instance of a DRX cycle, since discontinuous reception can be interrupted in response to a user-initiated input or other interruption. In some examples, such as when the processing circuit 402 is implementing DRX in Enhanced Cell_FACH, the gap length is generally a function not only of the DRX parameters indicated by the network, but also network activity and search requirements.

In some examples, the processing circuit 402 can compute the DRX gap length empirically, such as in a polling-type fashion. For instance, the processing circuit 402 may perform a short look-ahead window for activity to determine an estimate of the DRX awake period and the gap duration.

Returning to FIG. 5, with the DRX gap length determined from 502, the UE 400 can select a power reduction technique based on the determined DRX gap length at 504. That is, the UE 400 can determine how aggressively to perform power savings based on the computed or determined gap length. For example, the processing circuit 402 (e.g., the DRX circuit/module 408) executing the DRX operations 414 can identify a power reduction technique associated with the determined discontinuous reception (DRX) gap length from among a plurality of power reduction techniques. In at least one example, the UE 400 can identify a range of DRX gap lengths into which the determined DRX gap length falls, and can select the power reduction technique associated with the identified range.

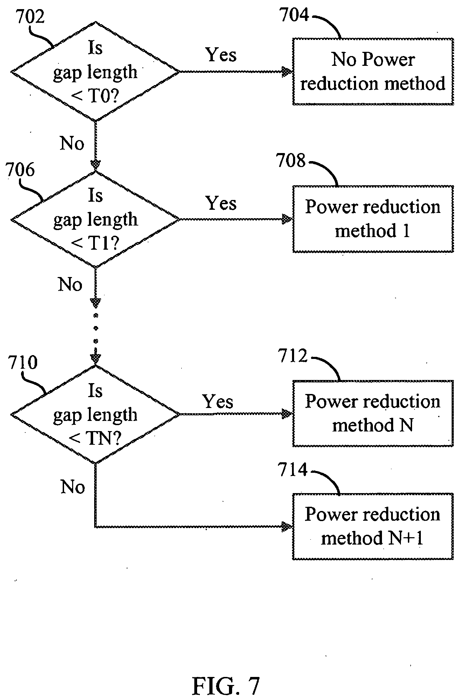

FIG. 7 is a flow diagram depicting at least one example of an algorithm that may be implemented by the processing circuit 402 (e.g., the DRX circuit/module 408) executing the DRX operations 414 to select a power reduction technique based on the DRX gap length. In general, the UE 400 can identify a range of DRX gap length values into which the determined DRX gap length falls, and can select the power reduction technique associated with the identified range. For example, at decision diamond 702, the processing circuit 402 can determine whether the DRX gap length is below a first threshold T0. In this example, a gap length less than the first threshold T0 indicates a relatively short gap length. By way of example and not limitation, the first threshold T0 may be about 2 ms. If the gap length is less than the threshold T0, the processing circuit 402 may identify that no power reduction technique is to be applied to the receiver circuit 412 at operation 704. That is, for this example, when the gap length is sufficiently short, it may not be beneficial to power savings and/or performance to power down a portion of the receiver circuit 412. Accordingly, the example in FIG. 7 can leave the receiver circuit 412 powered ON at its previous power levels.

On the other hand, if the gap length is not less than the first threshold T0, the processing circuit 402 may proceed to decision diamond 706, where the processing circuit 402 can determine whether the DRX gap length is less than a second threshold T1. In this example, a gap length that is greater than the first threshold T0 and less than the second threshold T1 can indicate a medium gap length. By way of example and not limitation, the second threshold T1 may be about 40 ms. If the DRX gap length is less than the second threshold T1, the processing circuit 402 may identify that a first power reduction technique is to be applied to the receiver circuit 402 at operation 708.

If the DRX gap length is not less than the second threshold T1, the processing circuit 402 may proceed to decision diamond 710. As illustrated in the flow diagram in FIG. 7, any number N of different thresholds may be utilized. In this example, at decision diamond 710, the processing circuit 402 can determine whether the DRX gap length is less than an *N*-th threshold TN. By way of example and not limitation, the *N-*th threshold TN may be several hundred or several thousand milliseconds. If the DRX gap length is less than the *N-*th threshold TN (and greater than any of the preceding thresholds), the processing circuit 402 may identify that an *N*-th power reduction technique is to be applied to the receiver circuit 402 at operation 712.

If, however, the DRX gap length is greater than the *N*-th threshold, then the DRX gap length may be considered to be at the upper end of the expected gap lengths. In this example, the processing circuit 402 may proceed to operation 714, where the processing circuit 402 can identify that an *N*+1-th power reduction technique is to be applied to the receiver circuit 402.

It will be apparent to a person of ordinary skill in the art that the values for the DRX gap lengths, the number of gap length thresholds, and the specific power reduction techniques applied for each threshold may vary according to achieve differing power saving and performance goals.

Referring again to FIG. 5, after a power reduction technique is selected, the UE 400 can power down one or more components of the receiver circuit 412 during the DRX gap according to the selected power reduction technique, at step 506. For example, the processing circuit 402 (e.g., the DRX circuit/module 408) executing the DRX operations 414 can apply the identified power reduction technique to the receiver circuit 412 during the DRX gap. In some examples, the processing circuit 402 (e.g., the DRX circuit/module 408) executing the DRX operations 414 may actuate, or cause another component to actuate, one or more switches and/or adjust, or cause another component to adjust, one or more power levels to one or more circuits or components of the receiver circuit 412.

In general, the various power reduction techniques may include configuring one or more hardware components of the receiver circuit 412 to operate in a low power mode. For example, the power reduction techniques may include powering down or OFF one or more hardware components of the receiver circuit 412, disabling or suspending use of various hardware components of the receiver circuit 412, and/or reducing a clock speed at one or more hardware components of the receiver circuit 412. The hardware components of the receiver circuit 412 may include, for example, analog components and digital components (e.g., a receiver, a receive frame processor, a receive processor, and/or a channel processor). For example, various power reduction techniques may include disabling/suspending use of various hardware components of the receiver circuit 412 used to receive signaling (e.g., a receiver, a receive frame processor, and/or a receive processor); disabling/suspending the use of various hardware components of the receiver circuit 412 used to decode the signaling for various channels (e.g., a receive frame processor, a receive processor, and/or a channel processor); reducing clock speeds at one or more hardware components of the receiver circuit 412 (e.g., at a receive frame processor, a receive processor, a channel processor, and/or at a controller/processor); or a combination of the above.

According to one implementation, referring to the example in FIG. 7, for a relatively short DRX gap length less than the first threshold T0, the UE 400 may determine not to perform any power optimizations. For a medium gap length less than the second threshold T1, but not less than the first threshold T0, the first power reduction technique may instruct the UE 400 to power down or OFF analog components of the receiver circuit 414 and, in some examples, one or more of the digital baseband components of the receiver circuit 414. Finally, for the longest gap lengths, greater than or equal to the second threshold T1, the power reduction method N may instruct the UE 400 to completely power OFF one or more components of both the analog components and the digital baseband components of the receiver circuit 414.

It is noted that the threshold values and power reduction methods provided in this disclosure serve as examples, and other examples and implementations may employ any suitable number of different power reduction techniques in accordance with a corresponding number different ranges of gap lengths. In some implementations, the specific thresholds and power reduction techniques applied by a UE 400 can vary depending on the particular DRX features that are enabled at the UE 400. For example, the thresholds and techniques for CPC-DRX in CELL_DCH state may differ from the thresholds and techniques for DRX in Enhanced CELL_FACH state.

According to the disclosure, UEs utilizing one or more features described herein can select from among a plurality of available power reduction methods, algorithms, or techniques, in accordance with the duration of the DRX gap in a DRX cycle. In this way, such UEs can determine how aggressive to perform power savings and can optimize the power conservation and performance associated with discontinuous reception.

While the above discussed aspects, arrangements, and embodiments are discussed with specific details and particularity, one or more of the components, steps, features and/or functions illustrated in FIGS. 1, 2, 3, 4, 5, 6, and/or 7 may be rearranged and/or combined into a single component, step, feature or function or embodied in several components, steps, or functions. Additional elements, components, steps, and/or functions may also be added or not utilized without departing from the present disclosure. The apparatus, devices and/or components illustrated in FIGS. 1,2, and/or 4 may be configured to perform or employ one or more of the methods, features, parameters, and/or steps described with reference to FIGS. 3, 5, 6, and/or 7. The novel algorithms described herein may also be efficiently implemented in software and/or embedded in hardware.

While features of the present disclosure may have been discussed relative to certain embodiments and figures, all embodiments of the present disclosure can include one or more of the advantageous features discussed herein. In other words, while one or more embodiments may have been discussed as having certain advantageous features, one or more of such features may also be used in accordance with any of the various embodiments discussed herein. In similar fashion, while exemplary embodiments may have been discussed herein as device, system, or method embodiments, it should be understood that such exemplary embodiments can be implemented in various devices, systems, and methods.

Also, it is noted that at least some implementations have been described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function. The various methods described herein may be partially or fully implemented by programming (e.g., instructions and/or data) that may be stored in a machine-readable, computer-readable, and/or processor-readable storage medium, and executed by one or more processors, machines and/or devices.

Those of skill in the art would further appreciate that the various illustrative logical blocks, modules, circuits, and algorithm steps described in connection with the embodiments disclosed herein may be implemented as hardware, software, firmware, middleware, microcode, or any combination thereof. To clearly illustrate this interchangeability, various illustrative components, blocks, modules, circuits, and steps have been described above generally in terms of their functionality. Whether such functionality is implemented as hardware or software depends upon the particular application and design constraints imposed on the overall system.

The various features associate with the examples described herein and shown in the accompanying drawings can be implemented in different examples and implementations without departing from the scope of the present disclosure. Therefore, although certain specific constructions and arrangements have been described and shown in the accompanying drawings, such embodiments are merely illustrative and not restrictive of the scope of the disclosure, since various other additions and modifications to, and deletions from, the described embodiments will be apparent to one of ordinary skill in the art. Thus, the scope of the disclosure is only determined by the literal language, and legal equivalents, of the claims which follow.

## Claims

1. A user equipment (104), **characterised by**:
means (408) for determining (502; 606) a discontinuous reception, DRX, gap length;
means (408) for selecting (504), from a plurality of power reduction techniques, a power reduction technique associated with the determined DRX gap length; and
means (408) for powering down (506) one or more components of a receiver circuit (412) during the DRX gap (302) according to the selected power reduction technique.

2. The user equipment of claim 1, wherein the means for determining the DRX gap length is adapted to estimate the DRX gap length based on a next instance of a DRX cycle.

3. The user equipment of claim 1, wherein the plurality of power reduction techniques comprises configuration of one or more hardware components of the receiver circuit to operate in a low power mode.

4. The user equipment of claim 3, wherein the one or more hardware components of the receiver circuit comprises one or more of:
an analog portion of the receiver circuit;
a portion of a digital portion of the receiver circuit; or
all portions of a digital portion of the receiver circuit.

5. The user equipment of claim 3, wherein the one or more hardware components of the receiver circuit comprises one or more components selected from a group of receiver circuit components comprising:
components adapted to receive signaling; and
components adapted to decode signaling.

6. The user equipment of claim 3, wherein the group of techniques further comprises: leaving all hardware components of the receiver circuit powered ON.

7. The user equipment of claim 1, wherein the plurality of power reduction techniques comprises one or more techniques selected from a group of techniques comprising:
suspending use of one or more hardware components of the receiver circuit;
reducing a clock speed at one or more hardware components of the receiver circuit; and
powering down one or more hardware components of the receiver circuit.

8. The user equipment of claim 1, wherein the power reduction technique associated with a DRX gap length below a first threshold includes leaving the receiver circuit powered ON.

9. A method operational on a user equipment (104), **characterised by**:
determining (502; 606) a discontinuous reception, DRX, gap length;
selecting (504), from a plurality of power reduction techniques, a power reduction technique associated with the determined DRX gap length; and
powering down (506) one or more components of a receiver circuit (412) during the DRX gap (302) according to the selected power reduction technique.

10. The method of claim 9, wherein determining the DRX gap length comprises: estimating the DRX gap length based on a next instance of a DRX cycle.

11. The method of claim 9, wherein selecting, from a plurality of power reduction techniques, a power reduction technique associated with the determined DRX gap length comprises:
determining a range of gap length values in which the determined DRX gap length is located; and
selecting a power reduction technique associated with the determined range.

12. The method of claim 9, wherein powering down one or more components of the receiver circuit during the DRX gap according to the selected power reduction technique comprises one or more of:
powering OFF one or more components of the receiver circuit;
disabling or suspending use of one or more components of the receiver circuit; or
reducing a clock speed at one or more components of the receiver circuit.

13. The method of claim 9, wherein powering down one or more components of the receiver circuit comprises:
powering down one or more components of the receiver circuit selected from a group of components comprising analog components and digital components.

14. The method of claim 13, wherein powering down one or more components of the receiver circuit comprises:
powering down at least a portion of digital components of the receiver circuit.

15. A processor-readable storage medium, comprising programming for causing a processing circuit to perform any one of the methods of claims 9-14.

## Patentansprüche

1. Nutzereinrichtung (104), die **gekennzeichnet ist durch**:
Mittel (408) zum Bestimmen (502; 606) einer Zwischenraumlänge eines diskontinuierlichen Empfangs bzw. einer DRX-Zwischenraumlänge (DRX = discontinuous reception);
Mittel (408) zum Auswählen (504), aus einer Vielzahl von Leistungsreduktionstechniken, einer Leistungsreduktionstechnik, die mit der bestimmten DRX-Zwischenraumlänge assoziiert ist; und
Mittel (408) zum Verringern von Leistung an bzw. Herunterfahren (506) einer oder mehrerer Komponenten einer Empfängerschaltung (412) während des DRX-Zwischenraums (302) entsprechend der ausgewählten Leistungsreduktionstechnik.

2. Nutzereinrichtung nach Anspruch 1, wobei die Mittel zum Bestimmen der DRX-Zwischenraumlänge ausgelegt sind zum Schätzen der DRX-Zwischenraumlänge basierend auf einer nächsten Instanz eines DRX-Zyklus.

3. Nutzereinrichtung nach Anspruch 1, wobei die Vielzahl von Leistungsreduktionstechniken Konfigurieren einer oder mehrerer Hardware-Komponenten der Empfängerschaltung aufweist, um in einem Modus mit geringer Leistung zu arbeiten.

4. Nutzereinrichtung nach Anspruch 3, wobei eine oder mehrere Hardware-Komponenten der Empfängerschaltung ein oder mehreres von Folgendem aufweisen:
einen analogen Teil der Empfängerschaltung;
einen Teil eines digitalen Teils der Empfängerschaltung; oder
alle Teile eines digitalen Teils der Empfängerschaltung.

5. Nutzereinrichtung nach Anspruch 3, wobei die eine oder die mehreren Hardware-Komponenten der Empfängerschaltung eine oder mehrere Komponenten aufweisen, die aus einer Gruppe von Empfängerschaltungskomponenten ausgewählt sind, die Folgendes aufweist: Sl
Komponenten, die ausgelegt sind, um Signalisierung zu empfangen; und
Komponenten, die ausgelegt sind, um Signalisierung zu decodieren.

6. Nutzereinrichtung nach Anspruch 3, wobei die Gruppe von Techniken weiter Folgendes aufweist:
Belassen aller Hardware-Komponenten der Empfängerschaltung im mit Leistung versorgten AN-Zustand.

7. Nutzereinrichtung nach Anspruch 1, wobei die Vielzahl von Leistungsreduktionstechniken eine oder mehrere Techniken aufweist, die aus einer Gruppe von Techniken ausgewählt sind, die Folgendes aufweisen:
Aussetzen einer Nutzung einer oder mehrerer Hardware-Komponenten der Empfängerschaltung;
Verringern einer Taktgeschwindigkeit an einer oder mehreren Hardware-Komponenten der Empfängerschaltung; und
Leistung verringern an bzw. Herunterfahren einer oder mehrere Hardware-Komponenten der Empfängerschaltung.

8. Nutzereinrichtung nach Anspruch 1, wobei die Leistungsreduktionstechnik, die mit einer DRX-Zwischenraumlänge unter einem ersten Schwellenwert assoziiert ist, das Belassen der Empfängerschaltung im mit Leistung versorgten AN-Zustand beinhaltet.

9. Ein Verfahren, das auf einer Nutzereinrichtung (104) betreibbar ist, das **gekennzeichnet ist durch**:
Bestimmen (502; 606) einer Zwischenraumlänge eines diskontinuierlichen Empfangs bzw. einer DRX-Zwischenraumlänge (DRX = discontinuous reception);
Auswählen (504), aus einer Vielzahl von Leistungsreduktionstechniken, einer Leistungsreduktionstechnik, die mit der bestimmten DRX-Zwischenraumlänge assoziiert ist; und
Leistung verringern an bzw. Herunterfahren (506) einer oder mehrerer Komponenten eines Empfängerschaltkreises (412) während des DRX-Zwischenraums (302) gemäß der ausgewählten Leistungsreduktionstechnik.

10. Verfahren nach Anspruch 9, wobei das Bestimmen der DRX-Zwischenraumlänge Folgendes aufweist:
Schätzen der DRX-Zwischenraumlänge basierend auf einer nächsten Instanz eines DRX-Zyklus.

11. Verfahren nach Anspruch 9, wobei das Auswählen, aus einer Vielzahl von Leistungsreduktionstechniken, einer Leistungsreduktionstechnik, die mit der bestimmten DRX-Zwischenraumlänge assoziiert ist, Folgendes aufweist:
Bestimmen eines Bereichs von Zwischenraumlängenwerten, in dem die bestimmte DRX-Zwischenraumlänge liegt; und
Auswählen einer Leistungsreduktionstechnik, die mit dem bestimmten Bereich assoziiert ist.

12. Verfahren nach Anspruch 9, wobei das Verringern von Leistung an bzw. Herunterfahren einer oder mehrerer Komponenten der Empfängerschaltung während des DRX-Zwischenraums gemäß der ausgewählten Leistungsreduktionstechnik ein oder mehreres von Folgendem aufweist:
AUS-Schalten einer oder mehrere Komponenten der Empfängerschaltung; Deaktivieren oder Aussetzen der Nutzung einer oder mehrerer Komponenten der Empfängerschaltung, oder
Verringern einer Taktgeschwindigkeit an einer oder mehreren Komponenten der Empfängerschaltung.

13. Verfahren nach Anspruch 9, wobei das Verringern von Leistung an bzw. Herunterfahren einer oder mehrerer Komponenten der Empfängerschaltung Folgendes aufweist:
Leistung verringern an bzw. Herunterfahren einer oder mehrerer Komponenten der Empfängerschaltung, die aus einer Gruppe von Komponenten ausgewählt sind, die analoge Komponenten und digitale Komponenten aufweist.

14. Verfahren nach Anspruch 13, wobei das Leistung verringern an bzw. Herunterfahren einer oder mehrerer Komponenten der Empfängerschaltung Folgendes aufweist:
Leistung verringern an bzw. Herunterfahren wenigstens eines Teils digitaler Komponenten der Empfängerschaltung.

15. Ein prozessorlesbares Speichermedium, das Programmierung aufweist, um eine Verarbeitungsschaltung zu veranlassen, eines der Verfahren nach Anspruch 9-14 durchzuführen.

## Revendications

1. Un équipement d'utilisateur (104), **caractérisé par** :
un moyen (408) de détermination (502; 606) d'une longueur d'intervalle de réception discontinue, DRX,
un moyen (408) de sélection (504), à partir d'une pluralité de techniques de réduction de puissance, d'une technique de réduction de puissance associée à la longueur d'intervalle de DRX déterminée, et
un moyen (408) de mise en veille (506) d'un ou de plusieurs composants d'un circuit récepteur (412) au cours de l'intervalle de DRX (302) selon la technique de réduction de puissance sélectionnée.

2. L'équipement d'utilisateur selon la Revendication 1, où le moyen de détermination de la longueur d'intervalle de DRX est adapté de façon à estimer la longueur d'intervalle de DRX en fonction d'une instance suivante d'un cycle de DRX.

3. L'équipement d'utilisateur selon la Revendication 1, où la pluralité de techniques de réduction de puissance comprend la configuration d'un ou de plusieurs composants matériels du circuit récepteur de façon à fonctionner dans un mode faible puissance.

4. L'équipement d'utilisateur selon la Revendication 3, où les un ou plusieurs composants matériels du circuit récepteur comprennent un ou plusieurs éléments parmi:
une partie analogique du circuit récepteur,
un partie d'une partie numérique du circuit récepteur, ou
toutes les parties d'une partie numérique du circuit récepteur.

5. L'équipement d'utilisateur selon la Revendication 3, où les un ou plusieurs composants matériels du circuit récepteur comprennent un ou plusieurs composants sélectionnés dans un groupe de composants de circuit récepteur comprenant:
des composants adaptés de façon à recevoir une signalisation, et
des composants adapté de façon à décoder une signalisation.

6. L'équipement d'utilisateur selon la Revendication 3, où le groupe de techniques comprend en outre:
le maintien de tous les composants matériels du circuit récepteur sous tension.

7. L'équipement d'utilisateur selon la Revendication 1, où la pluralité de techniques de réduction de puissance comprend une ou plusieurs techniques sélectionnées dans un groupe de techniques comprenant:
la suspension de l'utilisation d'un ou de plusieurs composants matériels du circuit récepteur,
la réduction d'une vitesse d'horloge au niveau d'un ou de plusieurs composants matériels du circuit récepteur, et
la mise en veille d'un ou de plusieurs composants matériels du circuit récepteur.

8. L'équipement d'utilisateur selon la Revendication 1, où la technique de réduction de puissance associée à une longueur d'intervalle de DRX sous un premier seuil comprend le maintien du circuit récepteur sous tension.

9. Un procédé opérationnel sur un équipement d'utilisateur (104), **caractérisé par**:
la détermination (502; 606) d'une longueur d'intervalle de réception discontinue, DRX,
la sélection (504), à partir d'une pluralité de techniques de réduction de puissance, d'une technique de réduction de puissance associée à la longueur d'intervalle de DRX déterminée, et
la mise en veille (506) d'un ou de plusieurs composants d'un circuit récepteur (412) au cours de l'intervalle de DRX (302) selon la technique de réduction de puissance sélectionnée.

10. Le procédé selon la Revendication 9, où la détermination de la longueur d'intervalle de DRX comprend:
l'estimation de la longueur d'intervalle de DRX en fonction d'une instance suivante d'un cycle de DRX.

11. Le procédé selon la Revendication 9, où la sélection, à partir d'une pluralité de techniques de réduction de puissance, d'une technique de réduction de puissance associée à la longueur d'intervalle de DRX déterminée comprend:
la détermination d'une plage de valeurs de longueur d'intervalle dans laquelle se situe la longueur d'intervalle de DRX déterminée, et
la sélection d'une technique de réduction de puissance associée à la plage déterminée.

12. Le procédé selon la Revendication 9, où la mise en veille d'un ou de plusieurs composants du circuit récepteur au cours de l'intervalle de DRX selon la technique de réduction de puissance sélectionnée comprend un ou plusieurs éléments parmi:
la mise hors tension d'un ou de plusieurs composants du circuit récepteur,
la désactivation ou la suspension de l'utilisation d'un ou de plusieurs composants du circuit récepteur, ou
la réduction d'une vitesse d'horloge au niveau d'un ou de plusieurs composants du circuit récepteur.

13. Le procédé selon la Revendication 9, où la mise en veille d'un ou de plusieurs composants du circuit récepteur comprend:
la mise en veille d'un ou de plusieurs composants du circuit récepteur sélectionnés dans un groupe de composants comprenant des composants analogiques et des composants numériques.

14. Le procédé selon la Revendication 13, où la mise en veille d'un ou de plusieurs composants du circuit récepteur comprend:
la mise en veille d'au moins une partie des composants numériques du circuit récepteur.

15. Un support à mémoire lisible par un processeur comprenant une programmation destinée à amener un circuit de traitement à exécuter l'un quelconque des procédés selon les Revendications 9 à 14.
